Europäisches Patentamt

European Patent Office

Office européen des brevets

(11) Publication number: **0 081 374**
A1

## (12) EUROPEAN PATENT APPLICATION

(21) Application number: 82306499.3

(22) Date of filing: 07.12.82

(51) Int. Cl.³: **F 15 B 9/03**
**H 01 F 7/06**

(30) Priority: 09.12.81 GB 8137040

(43) Date of publication of application:
15.06.83 Bulletin 83/24

(84) Designated Contracting States:
CH DE FR GB IT LI SE

(71) Applicant: SPERRY CORPORATION
1290, Avenue of the Americas
New York, N.Y. 10019(US)

(72) Inventor: Hammond, John Anthony Gordon
2 Osprey Drive
Hayling Island Hampshire PO11 9BX(GB)

(74) Representative: Michaels, Peter Albert
Sperry Univac Patent & Licensing Services M.S. N1W4
Sperry Rand Ltd. Sperry Univac Centre Brentfields
London NW10 8LS(GB)

(54) Pulse width modulated control circuit for double solenoid valve.

(57) In a pulse width modulated control circuit for a double solenoid valve, each of the solenoid circuits contains a sensing resistor to provide a signal corresponding to the current through the associated solenoid. The two signals so obtained are applied to a differential amplifier whose output constitutes a feedback signal proportional to the net difference between the solenoid currents, and hence between the solenoid forces.

A common mode bias current and a dither signal may be applied to the solenoids to respectively improve linear response in the null region, and to reduce hysteresis.

Fig.1

EP 0 081 374 A1

Croydon Printing Company Ltd

-1-

## Pulse Width Modulated Control Circuit for Double Solenoid Valve

This invention relates to control circuits for electrically operated valves, and in particular to pulse width modulated control circuits for hydraulic valves employing two counter-acting solenoids to position the valve spool.

In a known form of a pulse width modulated control circuit for a double solenoid valve, a valve position sensor provides a feedback signal which is processed in a feedback buffer in combination with lead and lag comparators, so as to provide a valve position feedback to the control circuit.

An obvious disadvantage of the aforementioned prior art arrangement is the inclusion of a mechanical element in the feedback path.

The present invention aims to provide an improved pulse width modulated control circuit which does not require a mechanical/electrical feedback generating device such as, for instance, a position transducer.

The present invention accordingly provides a pulse width modulated control circuit in which the feedback signal is derived from measurement of both solenoid currents. Each of the solenoid circuits contains a sensing element to provide a signal corresponding to the current through the solenoid concerned, and both signals are applied to a differential amplifier, whose output is a feedback signal which is proportional to the net difference of the solenoid currents. With the two solenoids producing output forces which act in opposite directions, the solenoids being usually mounted at opposite ends of the valve, the net current difference between them is related to the net force available to actuate the spool.

Apart from avoiding the need to include a mechanical element in the feedback loop, the differential feedback arrangement of the present invention has some further potential advantages.

Firstly, the linearity of the net force/current characteristic of the solenoids in the null region can be improved by applying a standing current to each solenoid. Due to the differential current feedback, such a common mode bias current can be applied to each solenoid without affecting the transconductance gain of the current feedback loop.

Moreover, such a common mode bias current permits a superimposed dither signal to be applied to the valve throughout the whole range and, in particular, right through the null region, the purpose of the dither signal being to minimise the hysteresis of the system.

In order to avoid cancellation of the solenoid dither forces, the solenoids have to be fed with antiphase signals. By obtaining the pulse width modulation signal from applying a triangular carrier wave to a dual comparator window, which is raised or lowered relative to the triangular wave by the modulating dither signal, this requirement of antiphase signals is inherently fulfilled. The dual comparator window is obtained from using two mutually-inverted comparators which thus respond alternately as a result of the changing signal polarity.

In applications in which such a dither signal is desirable, it will generally be necessary to lock the triangular carrier wave frequency to the dither frequency, i.e. source of the pulse width modulated signals to the oscillator producing the dither frequency. This may readily be achieved by feeding the output of the carry oscillator to the trip point of the dither oscillator.

Adjustment of the common mode bias current to optimise the net force/current linearity of the solenoids can, in the present invention, be achieved by a single variable resistor which controls the width of the dual comparator window relative to the amplitude of the triangular wave carrier frequency.

A further advantage of the present invention over the prior art arrangement, using positional feedback, lies in automatic stabilisation of the transconductance gain against variations in the coil resistance which may be due, for instance, to fluctuations of the operating temperatures of the solenoid coils.

A further advantage is that the invention has the 'fail safe' property that if an open-circuit fault should occur in one solenoid winding, this will automatically cause the bias current through the other solenoid to fall to zero.

Lastly, employing current feedback rather than position feedback avoids or at least mitigates problems of phase lag in the feedback loop.

As will be explained further in more detail below, in order to obtain the best results it is necessary to derive the feedback signal from a sensing resistor lying in the circuit loop of the solenoid coils and associated fly-wheel diodes.

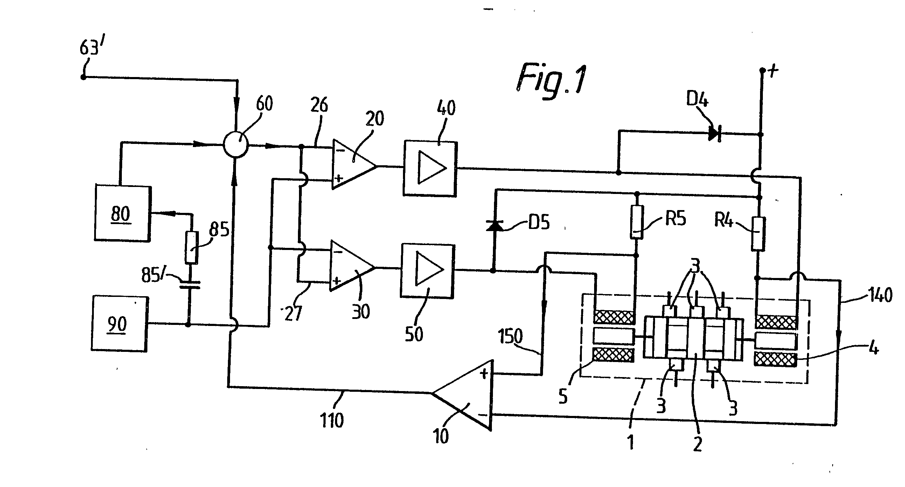

The present invention will now be explained further by way of a particular embodiment, and with reference to the accompanying drawings of which Figure 1 shows schematically the main components of a valve control arrangement,

Figure 2 is a detailed circuit diagram of the control circuit of Figure 1,

Figure 3 is a graph showing the transfer characteristics of a double solenoid, and

Figures 4 and 5 show various waveforms occurring in the control circuit of Figure 2.

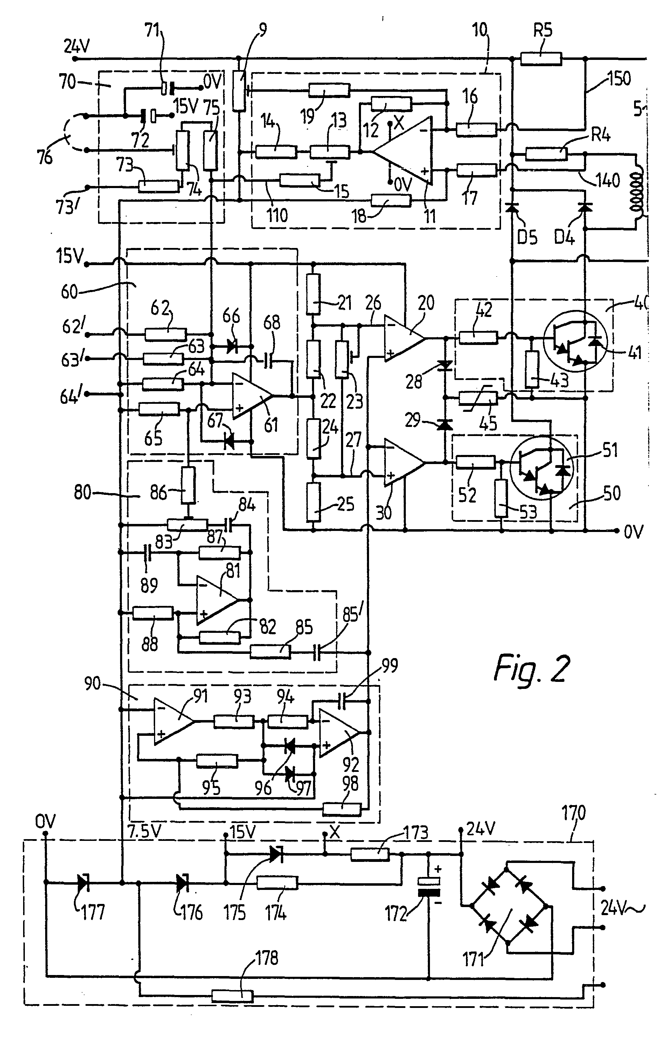

Referring now to Figures 1 and 2 a hydraulic valve 1 has a landed spool 2, the lands of which cooperate with appropriate one's of ports 3 to regulate fluid flow through the valve. The valve spool 2 is positioned within its associated bore by the action of solenoids 4 and 5. The solenoids 4 and 5 are connected to the respective outputs of amplifiers 40 and 50, and sensing resistors R4 and R5 are connected in series with the respective solenoid 4 and 5. One fly-wheel diode D4 and D5 lies in parallel each of the solenoid/resistor chains 4/R4 and 5/R5. The current supplied by the power amplifier 40 is controlled by means of the amplifier 20, whose output is a function of the relative magnitudes of the signal arriving at the inverting input from summing circuit 60, and the output signal from triangular wave generator 90 supplied to the non-inverting input. Similarly, the power amplifier 50 is controlled by the output signal of the amplifier 30 in accordance with the relative magnitudes of the signal from the summing circuit 60, supplied on a line 27 to the non-inverting input and the output signal of the triangular wave generator 90 arriving at its inverting input. The output signal of the summing circuit 60, which is supplied to amplifiers 20 and 30, is a resultant of a demand signal input applied to input terminal 64, a feedback signal present on line 110 from amplifier 10 and the output signal from dither oscillator 80.

The feedback signal on line 110 is derived by comparing the input signals on lines 140 and 150. The magnitude of the signals on lines 140 and 150 is a measure of the solenoid current through the corresponding one of solenoids 4 and 5. The function of the amplifier 10 is to derive a feedback signal which corresponds to the difference between the two solenoid currents and hence the difference between the forces exerted on the valve spool by the two solenoids.

Referring now more specifically to Figure 2 each of the two power amplifiers 40 and 50 consists essentially of a power transistor 41 and 51, which are respectively supplied via resistors 42 and 52 with the output signal of, respectively, the amplifier 20 and the amplifier 30. The power transistors will normally be mounted on insulated common heat sink, to which is thermally connected the thermistor 45, which is chosen to disable the power transistors if the temperature rises above a pre-set temperature, for instance $75^0$C, thereby providing a simple overload protection for the power transistors 41 and 51, particularly in case their outputs are shortcircuited.

One input of each of the two amplifiers 20 and 30 is connected to the output of the triangular wave generator 90, and the other input of each amplifier is connected to a resistor network 21 and 22, 23, 24 and 25, to which is supplied, at the junction between resistors 22 and 24, the output of the summing circuit 60. The voltage dividers 21, 22 and 24, 25 respectively define the upper and lower limits of the dual comparator window by virtue of the junction between resistors 21 and 22 being connected to the inverting input, and the junction between resistors 24 and 25 being connected to the non-inverting input of amplifiers 20 and 30 respectively.

The difference in voltage between line 26 which leads to the inverting input of amplifier 20 and a line 27 which leads to the non-inverting inputing of amplifier 30, determines the width of the dual comparator window. This width may be adjusted by means of a potentiometer 23.

The summing circuit 60 includes an amplifier 61, the output of which is connected to the junction between resistors 22 and 24. The non-inverting input of the amplifier 61 receives - via resistor 86 - the output of the dither oscillator 90 and is connected via resistor signal 85 to signal earth at terminal 64. The non inverting input of the amplifier 61 which by virtue of the circuit configuration constitutes a virtual earth is connected to signal earth via a resistor 64 and also receives a composite signal made up of the demand signal input applied to either terminal 63 - or as explained below terminal 73 - and the feedback signal from feedback amplifier 10 via line 110. A further input connection 62 - conected to the virtual earth via resistor 62 - enables a further feedback signal to be applied to the summing circuit. Such a further feedback signal may, for instance, be provided by an external flow sensor located in one of the fluid paths associated with the valve 1 of Figure 1.

Input 73 to the ramp generator 70 will normally be used in place of demand signal input 63 if the demand signal is derived from a manual control such as, for instance, a joy-stick control. It has been found that introducing a ramp with a rise time to delay response by approximately 270ms improves the smoothness of a manually controlled hydraulic system, for instance a hydraulic lift, because it attenuates the effects of overcompensation through rapid joy-stick movement by the operator of such a system. In order to arrive at a ramp generator whose configuration has no adverse effect on the input signal level at the inverting input of amplifier 61, an external linkage 76 is required to be inserted between the sliding contact of potentiometer 74 and the centre point between capacitors 71 and 72.

The non-inverting and inverting input of respectively amplifiers 20 and 30 are connected as aforesaid to the output of the triangular wave generator 90 which, in the presently described embodiment, is set to operate at a frequency of 1.1KHz.

The dither generator 80 operates at one tenth of the frequency of the triangular wave generator, i.e. at 110Hz. In order to prevent the occurrence of low frequency beats in the common mode current region, the carrier and dither frequencies need to be locked together. This is achieved in the present circuit by feeding a portion of the output signal of triangular wave generator 99 via capacitor 85 and resistor 85 to the trip point of the dither oscillator, i.e. the non-inverting input of the amplifier 81.

Power is supplied to the above-described solenoid control circuit via a power supply circuit 170, which consists, basically, of a full wave rectifier, receiving 24 volt AC at its input and providing a series of output voltages stabilised by means of diodes 175 to 177.

Suitable values for the components of the circuit of Figure 2 are listed below in table 1. It should be noted however that, for instance the value of resistor 62 is chosen to scale external feedback receiving the feedback signal from a flow sensor in the ratio of 10 to 1. Other values of this resistor will, of course, be appropriate for different scaling of the feedback signal from the flow sensor or transducer feedback signal.

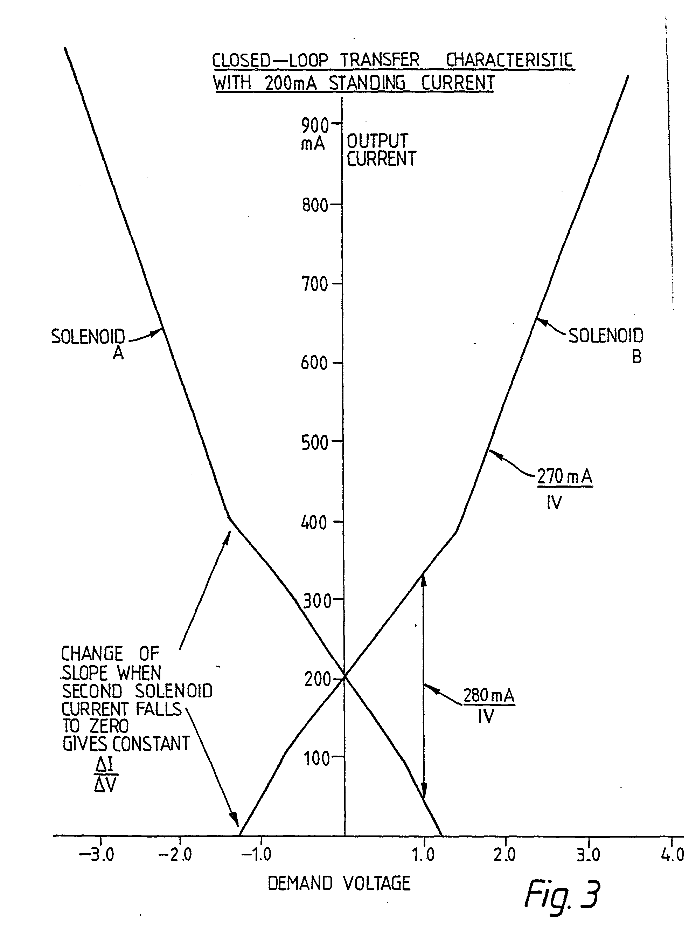

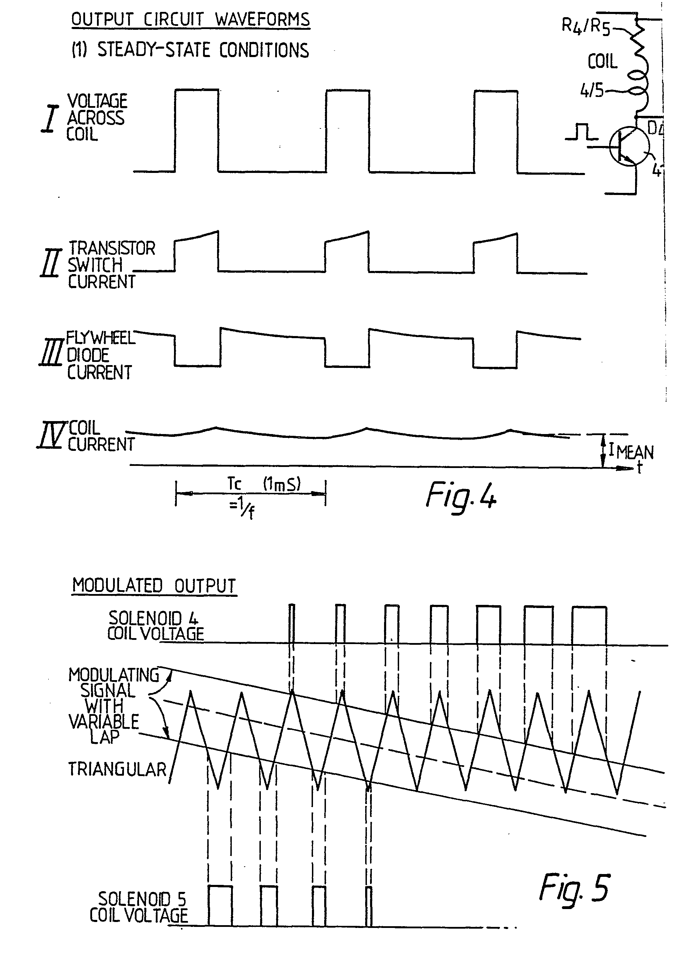

Referring now also to Figures 3 and 4, in operation of the control circuit of Figure 2, a triangular wave of fixed amplitude is generated by the triangular wave generator 90. This triangular wave signal is, in the described manner, applied to the appropriate inputs of amplifiers 20 and 30, the other inputs of which receive the modulating signal output from the summing circuit 60. The input signals to the power amplifiers 40 and 50, are square wave pulses of selected width as shown in Figure 5.

Figure 4 shows various waveforms resulting from a steady-state input pulse sequence with waveform I showing the voltage across the solenoid corresponding to the transistor input waveform waveform II showing the transistor switch current, waveform III the fly-wheel diode current and waveform IV the resulting coil current produced in response to the input current to one of the power transistors.

Turning now to Figure 5, it can be seen that the widths of the pulses reaching the input of the power amplifiers 40 and 50 depend, for a given width of the dual comparator window, on the relative voltage level of the modulating signal on line 26 and the positive maximum amplitude of the triangular waveform in the case of amplifier 20, and the modulating signal level applied via line 27 and the minimum amplitude of the triangular waveform in the case of amplifier 30. It is further readily apparent that the overlap between the point of intersection between modulating signal and triangular wave, at which input pulses cease to be applied to amplifier 50, and the point at which input pulses are beginning to appear at the input of amplifier 40, is a function of the width of the comparator window or, in other words, of the difference in voltage levels on lines 26 and 27. Accordingly, this overlap, which results in an overlap of the solenoid currents and hence the forces acting on the valve spool of the valve 1, produced by the solenoids, can readily be adjusted by setting the sliding contact of the potentiometer 23.

In view of the generally non-linear current force characteristic, in the region of zero current, even for a nominally linear solenoid it has been found to be of advantage to operate with a certain amount of overlap. The effect of the overlap is to considerably mask the non-linearities of the solenoids. Figure 3 shows the transfer characteristics for a 200mA common mode bias current, as obtained from the circuit of Figure 2. The change of slope in the current voltage characteristic in one of the solenoids, when the current through the other solenoid falls to zero, results in a constant overall ratio $\dfrac{\Delta I}{\Delta V}$.

## TABLE I

### List of Parts

| | | | |
|---|---|---|---|
| 4, 5 | Solenoids 18 ohm, 0.9A | R64, R65 | 10K |
| R4, R5 | 0.47 ohm RS part 147-553 | D66, D67 | 1N4148 |
| D4, D5 | 1N4003 | C68 | 2200pF |
| R9 | 100K | C71, C72 | 4700nF 35V, Tant. |
| 11 | op-amp. | R73 | 10K |
| R12 | 91K | R74 | trim-pot 100K |
| P13 | trim-pot 10K | R75 | 150K |
| R14 | 1K | 81 | op-amp 747B |
| R15, R16 | 33K | R82 | 10K |
| R17 | 33K | P83 | trim-pot 100K |
| R18 | 91K | C84 | 100nF |
| R19 | 680K | R85 | 100K |
| 20 | "4" of quad-amp. LM348 | C85' | 10nF |
| R21 | 82K | R86 | 1M |
| R22 | 33K | R87 | 39K |
| P23 | trim-pot 500K | R88 | 100K |
| R24 | 33K | C89 | 47nF |
| R25 | 82K | 91 | "1" of quad-amp. LM348 |
| D28, D29 | 1N4148 | 92 | "2" of quad-amp LM348 |
| 30 | "3" of quad-amp. LM 348 | R93 | 2.2K |
| T41 | TIP 121 | R94 | 8.2K |
| R42 | 2.2K | R95 | 15K |
| R43 | 1K | D96, D97 | 1N4148 |
| 45 | 75°C Sensor R/S part 307-935 | R98 | 33K |
| T51 | TIP 121 | C99 | 10nF |
| R52 | 2.2K | 171 | bridge-rectifier R/S part 261-508 |
| R53 | 1K | C172 | 2200uF, 40V |
| 61 | op-amp 747A | R173 | 100 ohm |
| R62, R63 | 10K | R174 | 330 ohm, 1W |
| | | 175, 176, 177 | BZX61 |
| | | R178 | 47 ohm |

## Claims

1. A pulse width modulated control circuit for a pair of oppositely acting solenoids comprising a carrier wave generator, means to modulate the carrier wave produced by the generator in response to an input demand signal and a feedback loop providing a feedback signal representing the difference between the current flowing in the first solenoid circuit and the current flowing in the second solenoid circuit.

2. A circuit as claimed in claim 1 and further incorporating means to superimpose a common mode bias signal on to the modulating signal.

3. A circuit as claimed in claim 2 incorporating a dither oscillator phase-locked to the carrier wave oscillator and operating at a frequency such as to cause in the common mode range a sequence of carrier wave pulses to be applied alternatively to one and the other power amplifier controlling the current flow through one and the other of the solenoids.

Fig.1

Fig. 2

CLOSED—LOOP TRANSFER CHARACTERISTIC WITH 200mA STANDING CURRENT

Fig. 3

OUTPUT CIRCUIT WAVEFORMS

(1) STEADY-STATE CONDITIONS

R4/R5

COIL

4/5

D4

4

I VOLTAGE ACROSS COIL

II TRANSISTOR SWITCH CURRENT

III FLYWHEEL DIODE CURRENT

IV COIL CURRENT

$I_{MEAN}$

t

Tc (1mS) =1/f

Fig. 4

MODULATED OUTPUT

SOLENOID 4 COIL VOLTAGE

MODULATING SIGNAL WITH VARIABLE LAP

TRIANGULAR

SOLENOID 5 COIL VOLTAGE

Fig. 5

**European Patent Office**

# EUROPEAN SEARCH REPORT

EP  82 30 649

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 763 745  (CHANDLER EVANS) *Column 3, lines 41-67; column 4; column 5, lines 1-34* | 1-3 | F 15 B    9/03 H 01 F    7/06 |
| A | DE-A-2 451 128  (BINDER MAGNETE) *Page  4,  line  7  to end; pages 5,6* | 1 | |
| A | CH-A-  430 837  (SULZER) *Column 3, lines 57-67; column 4, lines 1-12* | 1 | |
| A | US-A-3 768 373  (CHANDLER EVANS) | | |
| A | GB-A-2 037 951  (GRESEN MANUFACTURING COMP.) | | TECHNICAL FIELDS SEARCHED (Int. Cl. ³) |
| A | US-A-4 235 153  (GENERAL ELECTRIC) | | F 15 B    9/00 F 15 B   21/00 H 01 F    7/00 |
| A | US-A-3 870 931  (SUN CHEMICAL CORP.) | | |
| A | FR-A-2 265 162  (ETS. GRIFFET) | | |
| A | US-A-3 909 681  (HONEYWELL) | | |

The present search report has been drawn up for all claims

| Place of search | Date of completion of the search | Examiner |
|---|---|---|
| THE HAGUE | 23-03-1983 | VANHULLE R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82